# EUROPEAN PATENT APPLICATION

(11) **EP 2 372 968 A1**
(43) Date of publication of application: **05.10.2011**
(21) Application number: 10171934.2
(22) Date of filing: 04.08.2010
(51) Int. Cl.: H04L 29/06, H04W 12/08, H04L 29/12

(54) **Method for authorizing mobile communication apparatus by femtocell base station and femtocell base station**

(30) Priority: 01.04.2010 TW 099110060
(71) Applicant: Askey Computer Corp., Chung-Ho T'ai pei 23585 (TW)
(72) Inventor: Hsieh, Ching-Feng, Taipei City 108, Taiwan (TW); Wu, Wei-Lin, Shanghai (CN)
(74) Representative: Perani, Aurelio

(57) **Abstract**

A method for parking a mobile communication apparatus of a femtocell base station and applicable to a communication network including a core of an apparatus network, the femtocell base station, and the mobile communication apparatus. The femtocell base station obtains a RRC connection request of an international mobile station identity (IMSI) of the mobile communication apparatus and compares the obtained IMSI with the IMSIs in a mobile communication apparatus authority list created in the femtocell base station. Once the mobile communication apparatus enters a communication area covered by the femtocell base station, the femtocell base station will determine whether the mobile communication apparatus is authorized to park the communication area or not . Unauthorized subscribers are rejected before the femtocell base station is established the communication relation with the core of the apparatus network, thereby saving network resource and speeding up rejection.

## Description

### BACKGROUND OF THE INVENTION

### 1. Field of the Invention

The present invention relates to mobile communication apparatus parking technology in the field of wireless communication , and more particularly, to a method for authorizing a mobile communication apparatus by a femtocell base station, a femtocell base station and a processor readable medium.

### 2. Description of the Prior Art

A region with high-rises and plenty mobile communication subscribers per building is confronted with a problem, that is, the indoor environments are poorly covered by a mobile network. Femtocell base stations are regarded as an approach to expansion of the coverage of a mobile communication network and therefore are effective in solving the aforesaid problems facing inadequate network coverage for indoor environments.

In practice, after a mobile communication apparatus has moved into a communication area that fell within the coverage of a specific femtocell base station and the mobile communication apparatus would interpret the signal quality of the selected communication area, and attempt to make a request to park in the communication area. However, there is a limit of authority to park in the communication area covered by the femtocell base station, that is, only an authorized mobile communication apparatus or a subscriber can park in the communication area to operate the required business by means of a core of an apparatus network based in the communication area. As a result, a femtocell base station needs a mechanism for determining whether a mobile communication apparatus attempting to park in a communication area within the coverage of the femtocell base station is attributed to an authorized subscriber, and rejecting an unauthorized mobile communication apparatus.

According to the existing technology, two conventional methods are used to determine whether a mobile communication apparatus attempting to park in a communication area within the coverage of a specific femtocell base station is attributed to an authorized subscriber:

First, the information related to closed subscriber groups (CSG) is carried by a broadcast message sent from a femtocell base station to announce that parking in a communication area covered by the femtocell base station is restricted to those mobile communication apparatuses which participate in the CSG. After receiving the aforesaid information, the mobile communication apparatuses which are not attributed to the CSG will not park in the communication area. However, this method is only useful for the mobile communication apparatus supporting Release 8 version and later versions communication apparatus, and for those mobile communication apparatuses using the versions Release 5, Release 6 and Release 7, this method is inapplicable and useless.

Second, a femtocell base station records the identity of mobile communication apparatuses which park in a communication area covered by the femtocell base station. If a specific mobile communication apparatus attempts to park in the communication area and the femtocell base station discovers that the mobile communication apparatus is not an authorized subscriber, the femtocell base station will send a rejection message to notify the mobile communication apparatus of parking failure. In some situation (where a mobile communication apparatus parks by P-TMSI or TMSI, for example), where the femtocell base station has nearly finished parking processing by the time the femtocell base station discovers that the mobile communication apparatus is not an authorized subscriber, which will result a communication interruption (because, although the mobile communication apparatus fails to park in a communication area covered by the femtocell base station, the core of the apparatus network mistakenly believes that the mobile communication apparatus has successfully parked.)

Accordingly, it is imperative to devise a technique for parking a mobile communication apparatus in a femtocell base station, so as to avoid the aforesaid drawbacks of the prior art.

### SUMMARY OF THE INVENTION

In light of the aforesaid drawbacks of the prior art, the present invention provides a method for parking a mobile communication apparatus in a femtocell base station, so as to save network resources and speed up rejecting an unauthorized subscriber.

To achieve the above and other related objectives, the present invention provides a method for authorizing a mobile communication apparatus to park in a femtocell base station, applicable to a communication network comprising a core of an apparatus network, the femtocell base station, and the mobile communication apparatus, the method comprising the steps of: (1) creating a mobile communication apparatus authority list; (2) simulating after connecting to the mobile communication apparatus, the core of the apparatus network sending an inadmissible layer identity request to the mobile communication apparatus, so as for the mobile communication apparatus to feed back an inadmissible layer identity response to the femtocell base station, wherein the inadmissible layer identity response comprises an international mobile station identity (IMSI) of the mobile communication apparatus; and (3) after acquiring identity content that match with the IMSI fed back by the mobile communication apparatus from the mobile communication apparatus authority list according to the inadmissible layer identity request including the IMSI of the mobile communication apparatus sent from the mobile communication apparatus, an initial direct transfer acquired from the mobile communication apparatus is sent to the core of the apparatus network to authorize the mobile communication apparatus to acquire required business from the core of the apparatus network.

In the aforesaid method for authorizing a mobile communication apparatus to park in a femtocell base station, wherein step (2) comprises further steps of: (2-1) receiving a RRC connection request sent from the mobile communication apparatus; and (2-2) sending a RRC connection setup to the mobile communication apparatus according to the received RRC connection request, to enable the mobile communication apparatus to feed back an RRC connection setup complete and connect to the mobile communication apparatus.

In another embodiment, a method for authorizing a mobile communication apparatus to park in a femtocell base station of the present invention comprises the steps of: (1) creating a mobile communication apparatus authority list; and (2) after acquiring identity content that match with IMSI of a RRC connection request from the mobile communication apparatus authority list according to the RRC connection request including the IMSI of the mobile communication apparatus sent by the mobile communication apparatus, sending an initial direct transfer acquired from the mobile communication apparatus to the core of the apparatus network, to authorize the mobile communication apparatus to acquire required businesses from the core of the apparatus network.

In another embodiment, the present invention provides a femtocell base station for determining a parking permission for a mobile communication apparatus to reject the mobile communication apparatus to park in a communication area covered by the femtocell base station or to authorize the mobile communication apparatus to park in the communication area, in which the femtocell base station comprises: a memory cell for storing a mobile communication apparatus authority list including identity content, the identity content acting as a basis of authorizing a mobile communication apparatus that matches with the identity content to park in the femtocell base station; and a processor for connecting to the mobile communication apparatus according to a RRC connection request sent from the mobile communication apparatus and simulating a core of the apparatus network to send an inadmissible layer identity request to the mobile communication apparatus that creates the connection relation, to receive an inadmissible layer identity response including an IMSI of the mobile communication apparatus fed back by the mobile communication apparatus, and to search the mobile communication apparatus authority list for matched identity contents according to the IMSI, to authorize the mobile communication apparatus to park in the communication area when the searched identity contents match with the IMSI fed back from the mobile communication apparatus or to reject the mobile communication apparatus to park in the communication area when no identity contents that are found match with the IMSI fed back from the mobile communication apparatus.

In another embodiment, the present invention provides a processor readable medium comprising processor executable instructions that are executed in a communication network including the core of the apparatus network, a femtocell base station and a mobile communication apparatus, allowing the femtocell base station to authorize the mobile communication apparatus to park in a communication area covered by the femtocell base station, a mobile communication apparatus authority list that is installed in the femtocell base station authorizes a mobile communication apparatus to park in the femtocell base station, after the femtocell base station is connected to the mobile communication apparatus, the instructions enable the femtocell base to execute the steps of: (1) enabling the femtocell base station to simulate the core of the apparatus network by sending an inadmissible layer identity request to the mobile communication apparatus, and receiving an inadmissible layer identity response including IMSI of the mobile communication apparatus fed by the mobile communication apparatus according to the inadmissible layer identity request; and (2) enabling the femtocell base station to search the mobile communication apparatus authority list for identity contents that match with the IMSI fed back from the mobile communication apparatus, and allowing an affirmative determination to be followed by the femtocell base station's receiving an initial direct transfer from the mobile communication apparatus and sending the initial direct transfer to the core of the apparatus network via the femtocell base station so as for the core of the apparatus network to authorize the mobile communication apparatus to conduct required business from the communication area covered by the femtocell base station, and thereby allowing a negative determination to be followed by sending a RRC connection reject to the mobile communication apparatus via the femtocell base station.

In another embodiment, the present invention provides another processor readable medium comprising processor executable instructions that are executed in a communication network, which comprises a core of apparatus network, a femtocell base station and a mobile communication apparatus, wherein the femtocell base station authorizes the mobile communication apparatus to park in a communication area covered by the femtocell base station, and the femtocell base station having an installed mobile communication apparatus authority list that authorizes a mobile communication apparatus to park in the femtocell base station, the processor executable instructions enabling the femtocell base station to execute the steps of: (1) enabling the femtocell base station to receive a RRC connection request including IMSI of the mobile communication apparatus sent by the mobile communication apparatus; (2) enabling the femtocell base station to search the mobile communication apparatus authority list for identity contents that match with the IMSI fed back from the mobile communication apparatus, thereby allowing an affirmative determination to be followed by an initial direct transfer from the mobile communication apparatus to the femtocell base station, and the initial direct transfer sent to the core of the apparatus network via the femtocell base station so as for the core of the apparatus network to authorize the mobile communication apparatus to conduct required business from the communication area covered by the femtocell base station, and thereby allowing a negative determination to be followed by a RRC connection rejection to the mobile communication apparatus.

In conclusion, a method for parking a mobile communication apparatus in a femtocell base station according to the present invention entails: creating in a femtocell base station a mobile communication apparatus authority list that authorizes a mobile communication apparatus to park in the femtocell base station; and simulating an inadmissible layer identity request sent by the core of the apparatus network via the femtocell base station so as to obtain the IMSI of the mobile communication apparatus. In so doing, the present invention provides a method that enables an unauthorized subscriber to be rejected prior the establishment of a communication relation between the femtocell base station and the core of the apparatus network, such that the core of the apparatus network of the present invention will not receive any information related to a subscriber that has no authority from the femtocell base station. Unlike the conventional methods that reject an unauthorized subscriber on the last stage of the parking process. The present invention provides a method that saves the network resource and speeds up rejection process. Further, the present invention prevents inconsistence to occur in the mobile communication apparatus parking information between the femtocell base station and the core of the apparatus network.

### BRIEF DESCRIPTION OF THE DRAWINGS

FIG. 1 is a flow chart of a method for authorizing a mobile communication apparatus to park in a femtocell base station according to an embodiment of the present invention;
FIGS. 2A and 2B are flow charts illustrating a step S2 of determining parking permission shown in FIG. 1;
FIG. 3 is a functional block diagram of a femtocell base station according to the present invention; and
FIG. 4 is a functional block diagram of a processor readable medium according to the present invention.

### DETAILED DESCRIPTION OF THE EMBODIMENTS

The present invention is herein illustrated with specific embodiments, so that one skilled in the pertinent art can easily understand other advantages and effects of the present invention from the disclosure of the invention.

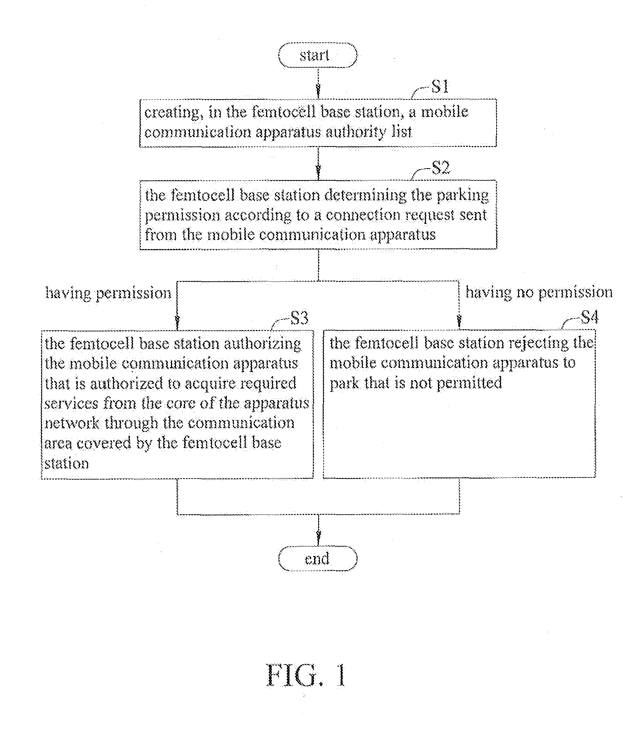

Please refer to FIG. 1, which is a flow chart of a method for authorizing a mobile communication apparatus to park in a femtocell base station according to an embodiment of the present invention. The method is applied to a communication network comprising a core of an apparatus network, a femtocell base station and a mobile communication apparatus. In the embodiment, the mobile communication apparatus is applicable to all TD-SCDMA mobile terminals and WCDMA terminals which are 3G-based and positioning-enabled and complied with 3GPP Release 99, Release 4, Release 5, Release 6, Release 7, Release 8, and later versions. Likewise, the femtocell base station is applicable to the Femtocell access points / home base stations for WCDMA and TD-SCDMA which are 3G-based and positioning-enabled and complied with 3GPP Release 99, Release 4, Release 5, Release 6, Release 7, and Release 8. The core of the apparatus network is a mobile switching center (MSC) or a serving GPRS support node (SGSN).

In this embodiment, the communication network that comprises the core of the apparatus network, the femtocell base station, and the mobile communication apparatus further comprises auto configuration servers (ACS) for configuring the femtocell base station. Also, provided between the femtocell base station and the core of the apparatus network is a femtocell access point gateway or a home node B gateway for allowing information exchange between the femtocell base station and the core of the apparatus network.

The method for authorizing a mobile communication apparatus to park in a femtocell base station determines a parking permission and sends a parking rejection or the parking permission when the mobile communication apparatus enters a communication area covered by the femtocell base station. In step S1 of the method, a mobile communication apparatus authority list that is installed in the femtocell base station authorizes the mobile communication apparatus to park in the femtocell base station. The mobile communication apparatus authority list has identity contents that are used for identifying whether the mobile communication apparatus is authorized to park in the femtocell base station. In the embodiment, the mobile communication apparatus authority list is dynamically installed through the aforesaid automatic installation server, or the mobile communication apparatus authority list is installed in a storage such as, a SIM card. The mobile communication apparatus authority list comprises an identity number of the mobile communication apparatus. The aforesaid identity contents are international mobile station identity (IMSI) of the mobile communication apparatus. Once the step S1 is completed, the femtocell base station will proceed to step S2.

In step S2, the femtocell base station determines the parking permission according to a connection request issued by the mobile communication apparatus. If it is determined that the mobile communication apparatus has the parking permission, the femtocell base station will proceed to step S3, or proceed to step S4.

In step S3, the femtocell base station authorizes the mobile communication apparatus that has the parking permission to acquire required business from the core of the apparatus network through the communication area covered by the femtocell base station. In other words, the femtocell base station authorizes the parking permission to the mobile communication apparatus to park in the communication area covered by the femtocell base station. Accordingly, once the mobile communication apparatus is authorized to park in the femtocell base station, the authorization is complete.

In step S4, the femtocell base station rejects the mobile communication apparatus that does not have the parking permission to park, and the authorization of the mobile communication by the femtocell base station is completed.

Note that the connection request issued by the mobile communication apparatus in step S2 indicates the communication between the mobile communication apparatus and the femtocell base station has occurred before the parking process is proceeded.

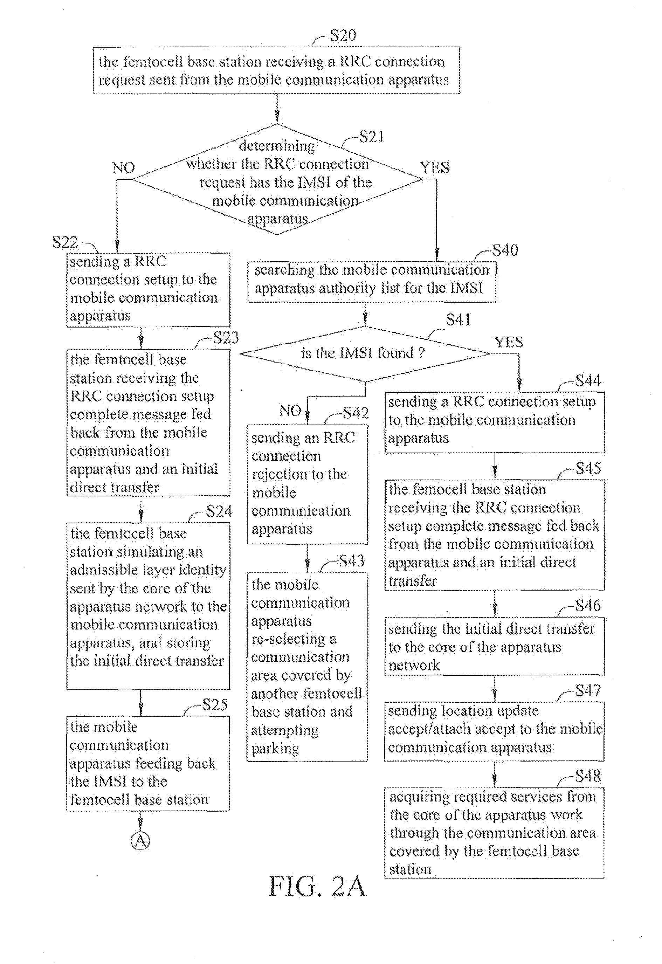

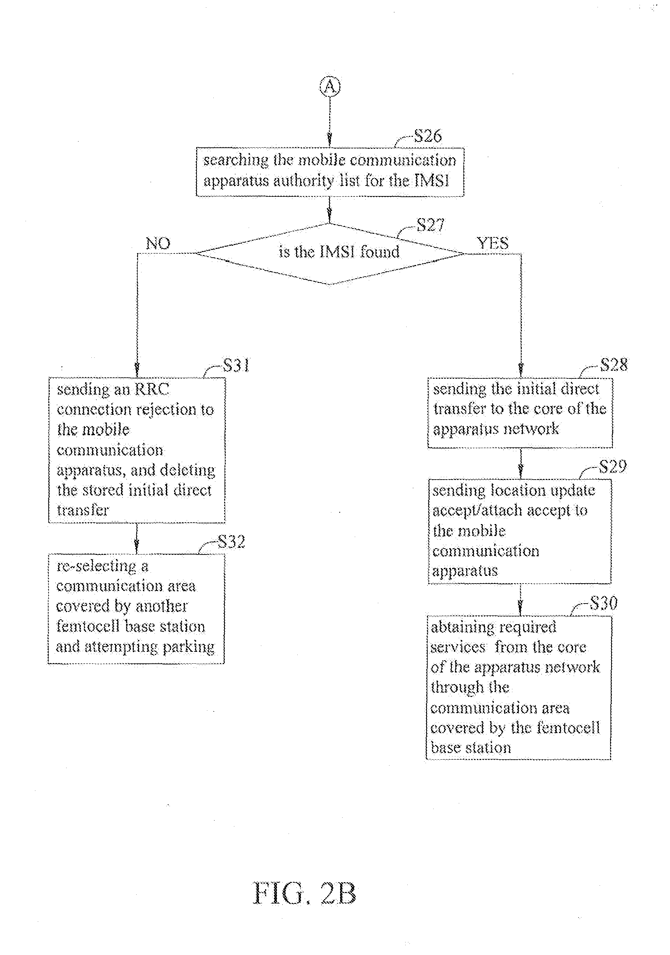

FIGS. 2A and 2B are flow charts illustrating step S2 of determining parking permission shown in FIG. 1. Step S20 is executed after the femtocell base station is installed with a mobile communication apparatus authority list that authorizes the mobile communication apparatus to park in the femtocell base station.

In step S20, the femtocell base station receives a RRC connection request sent by the mobile communication apparatus. Proceed to step S21.

In step S21, the femtocell base station analyzes whether the RRC connection request has the IMSI of the mobile communication apparatus. If yes, the femtocell base station proceeds to step S40, or proceeds to step S22.

In step S22, the femtocell base station sends a RRC connection setup to the mobile communication apparatus. Then the femtocell base station proceeds to step S23.

In step S23, the femtocell base station receives a RRC connection setup complete fed back from the mobile communication apparatus according to the received RRC connection request and an initial direct transfer. Then proceed to step S24.

In step S24, when receiving the RRC connection setup complete, the femtocell base station simulates an admissible layer identity request sent by the core of the apparatus network to the mobile communication apparatus, and then proceeds to step S25.

In step S25, the mobile communication apparatus, after receiving the inadmissible layer identity request, feeds back an admissive layer identity response that carries the IMSI of the mobile communication apparatus. Then proceed to step S26.

In step S26, the femtocell base station searches the mobile communication apparatus authority list for the IMSI according to the IMSI of the inadmissible layer identity request fed back from the mobile communication apparatus. Then proceed to step S27.

In step S27, the femtocell base station determines whether an identity number searched from the mobile communication apparatus authority list that matches with the IMSI fed back from the mobile communication apparatus. If there is a matched IMSI from the mobile communication apparatus authority list, the femtocell base station proceeds to step S28, or proceeds to step S30.

In step S28, the femtocell base station determines whether the mobile communication apparatus has parking permission, and sends the stored initial direct transfer to the core of the apparatus network. Then proceed to step S29.

In step S29, the core of the apparatus network receives the initial direct transfer sent from the femtocell base station, and sends the location update accept/attach accept to the mobile communication apparatus. Then proceed to step S30.

In step S30, the femtocell base station, according to the mobile communication apparatus that has parking permission, authorizes the mobile communication apparatus to acquire required business from the core of the apparatus network through the communication area covered by the femtocell base station. Accordingly, the step of authorizing the mobile communication apparatus to park in the femtocell base station according to the present invention is completed.

In step S31, since the femtocell base station does not find any identity numbers in the mobile communication apparatus authority list that match the IMSI fed back by the mobile communication apparatus, the femtocell base station sends a RRC connection rejection to the mobile communication apparatus. Then proceed to step S32. In an embodiment, the femtocell base station rejects the parking request of the mobile communication apparatus by sending a RRC connection release. The cause of release is congestion. The RRC connection rejection indicates that the network is congested. Alternatively, if the mobile communication apparatus authority list does not have the IMSI, that is the IMSI having no parking permission, the RRC connection rejection can be done in different forms and for different causes.

In step S32, the mobile communication apparatus, after receiving the RRC connection rejection, selects a communication area covered by another femtocell base station and attempts the parking in that communication area, and the selected femtocell base station executes the process of the aforesaid step S20.

According to the aforesaid step S21, once the femtocell base station analyzes the RRC connection request that comprises the IMSI of the mobile communication apparatus, the femtocell base station will execute the process in step S40, that is to search the mobile communication apparatus authority list for the IMSI. Then proceed to step S41.

In step S41, the femtocell base station determines whether an IMSI that matches with the IMSI fed back from the mobile communication apparatus that has been found from the mobile communication apparatus authority list. If there is a matched IMSI found in the mobile communication apparatus authority list, the femtocell base station will proceed the process in step S44, or step S42 .

In step S42, since the femtocell base station does not find any IMSI that matches with the IMSI fed back from the mobile communication apparatus from the mobile communication apparatus authority list, the femtocell base station sends the RRC connection rejection to the mobile communication apparatus, and proceeds to step S43.

In step S43, the mobile communication apparatus, after receiving the RRC connection rejection, re-selects a communication area covered by another femtocell base station, and attempts the parking in that communication area, and the selected femtocell base station executes the process of the aforesaid step S20 again.

According to the aforesaid step S41, after the femtocell base station has found the IMSI that matches the IMSI fed back from the mobile communication apparatus, step S44 is executed, that is the femtocell base station sending the RRC connection setup to the mobile communication apparatus, and then step S45 is executed.

In step S45, the femtocell base station receives the RRC connection setup complete fed back by the mobile communication apparatus according to the received RRC connection setup and an initial direct transfer. Then proceed to step S46.

In step S46, the femtocell base station sends the initial direct transfer fed back from the mobile communication apparatus to the core of the apparatus network. Then proceed to step S47.

In step S47, the core of the apparatus network, after receiving the initial direct transfer sent from the femtocell base station, issues a location update accept/attach accept to the mobile communication apparatus. Then proceed to step S48.

In step S48, the femtocell base station authorizes the mobile communication apparatus to acquire the required business from the core of the apparatus network through the communication area covered by the femtocell base station, according to the mobile communication apparatus that has the parking permission, thereby completing the process of the parking authorization of the mobile communication apparatus by the femtocell base station.

Therefore, the method for authorizing a mobile communication apparatus to park in a femtocell base station according to the embodiment of the present invention, the RRC connection request sent from the mobile communication apparatus to the femtocell base station can include an IMSI or not. The process of step S22 to step S32 shown in FIGS. 2A and 2B are executed while the RRC connection request does not have an IMSI. The process of step S40 to step S43 shown in FIGS. 2A and 2B are executed while the RRC connection request including an IMSI, and the femtocell base station, after receiving the RRC connection request including the IMSI, determines the parking permission. Therefore, before connected to a mobile communication apparatus that issues a RRC connection request including an IMSI, the femtocell base station rejects the parking request issued by a mobile communication apparatus that has no parking permission, thereby omitting the transferring process of the parking information and the connection information between the femtocell base station and the core of the apparatus network, therefore, the rejection time required is reduced.

Regarding the process of step S22 to step S32 shown in FIGS. 2A and 2B, the parking permission is determined after the femtocell base station has connected to the mobile communication apparatus, and after affirming that the mobile communication apparatus that issues a RRC connection request does not have parking permission, the femtocell base station deletes the initial direct transfer sent from the mobile communication apparatus, such that the femtocell base station and the core of the apparatus network can reject those mobile communication apparatuses that do not have the parking permission before establishing the communication between the femtocell base station and the core of the apparatus network. Accordingly, the core of the apparatus network will not receive any information from the mobile communication apparatus that does not have the parking permission. Thus, the network resource is effectively saved.

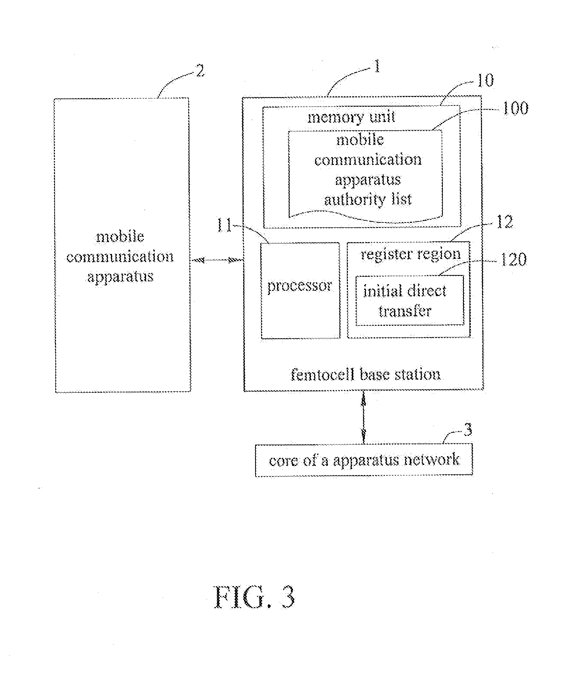

In order to achieve the method for authorizing a mobile communication apparatus to park in a femtocell base station, FIG. 3 shows a basic block diagram of a femtocell base station 1 of the present invention and a flow diagram of its application. The femtocell base station 1 of the embodiment comprises a memory unit 10, a processor 11 and a register region 12. The femtocell base station 1 determines a parking permission of the mobile communication apparatus 2, and rejects or authorizes the mobile communication apparatus 2 to park in a communication area covered by the femtocell base station 1.

The memory unit 10 stores a mobile communication apparatus authority list 100 that authorizes a mobile communication apparatus to park in the femtocell base station 1. The mobile communication apparatus authority list 100 has identity contents. In the embodiment, the identity contents is the IMSI of the mobile communication apparatus.

The processor 11 connects to the mobile communication apparatus 2 according to a RRC connection request sent from the mobile communication apparatus 2, and simulates an inadmissible layer identity request sent by the core of the apparatus network 3 to the connected mobile communication apparatus 2 in order to receive an inadmissible layer identity response that includes the IMSI of the mobile communication apparatus 2 fed back from the mobile communication apparatus 2, wherein the processor 11 searches the mobile communication apparatus authority list 100 according to the IMSI. After identity contents that are found match with the IMSI fed back from the mobile communication apparatus 2, the mobile communication apparatus 2 is authorized to park in the communication area. If there is no identity contents matched with IMSI fed back from the mobile communication apparatus 2, the mobile communication apparatus 2 is not authorized to park in the communication area.

The register region 12 stores an initial direct transfer 120 provided by the connected mobile communication apparatus 2. The processor 11, after authorizing the mobile communication apparatus 2 to park in the communication area, sends the initial direct transfer 120 to the core of the apparatus network 3 that provides the required business for the mobile communication apparatus 2. The processor 11 deletes the initial direct transfer 120 stored in the register region 12 when the parking permission of the mobile communication apparatus 2 in the communication area is rejected.

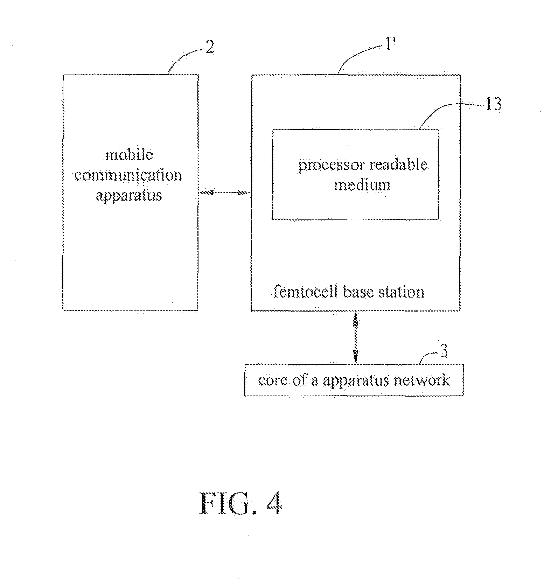

Moreover, the present invention further provides a processor readable medium comprising processor executable instructions. Referring to FIG. 4, a block diagram of a processor readable medium 13 of the present invention is shown. The processor readable medium 13 is a storage apparatus such as, a memory or a hard disk. The processor readable medium 13 stores instructions is carried out by a processor. The instructions are executed in a communication network including the core of the apparatus network, a femtocell base station 1' and the mobile communication apparatus 2 in order to achieve the method for authorizing a mobile communication apparatus to park in a femtocell base station.

In conclusion, a method for parking a mobile communication apparatus in a femtocell base station according to an embodiment of the present invention comprises: creating a mobile communication apparatus authority list in the femtocell base station that authorizes a mobile communication apparatus to park in the femtocell base station; and simulating an in admissible layer identity request sent by the core of the apparatus network via the femtocell base station so as to obtain the IMSI of the mobile communication apparatus. In so doing, the present invention provides a method that enables an unauthorized subscriber to be rejected prior to the establishment of a communication relation between the femtocell base station and the core of the apparatus network such that the core of the apparatus network will not receive any information related to an unpermitted subscriber from the femtocell base station. Unlike the prior art that teaches rejecting an unauthorized subscriber in the last stage of the communication process. On the contrary, the present invention provides a method that can save network resources and speed up the rejection of unauthorized subscriber. Also, the present invention prevents the inconsistence occurred in mobile communication apparatus parking information between the femtocell base station and the core of the apparatus network.

The foregoing descriptions of the detailed embodiments are provided to illustrate and disclose the features and functions of the present invention and are not intended to be restrictive of the scope of the present invention. It should be understood by those in the art that many modifications and variations can be made in the aforesaid embodiments according to the spirit and principle of the present invention. Hence, all equivalent modifications and variations made by persons skilled in the art without departing from the spirit and technical philosophy disclosed in the present invention should still fall within the scope of the invention as set forth in the appended claims.

## Claims

1. A method for authorizing a mobile communication apparatus to park in a femtocell base station, applicable to a communication network that comprises a core of an apparatus network, the femtocell base station and the mobile communication apparatus, the method comprising the steps of:
(1) creating a mobile communication apparatus authority list;
(2) simulating, after connecting to the mobile communication apparatus, an inadmissible layer identity request sent by the core of the apparatus network to the mobile communication apparatus, so as for the mobile communication apparatus to feed back an inadmissible layer identity response to the femtocell base station, wherein the inadmissible layer identity response comprises an international mobile station identity (IMSI) of the mobile communication apparatus; and
(3) after acquiring identity contents that match with the IMSI fed back by the mobile communication apparatus from the mobile communication apparatus authority list according to the inadmissible layer identity request that comprises the IMSI of the mobile communication apparatus sent from the mobile communication apparatus, and sending an initial direct transfer acquired from the mobile communication apparatus to the core of the apparatus network in order to authorize the mobile communication apparatus to acquire required business from the core of the apparatus network.

2. The method of claim 1, wherein step (2) comprises the steps of:
(2-1) receiving a RRC connection request sent from the mobile communication apparatus; and
(2-2) sending a RRC connection setup to the mobile communication apparatus according to the received RRC connection request to enable the mobile communication apparatus to be fed back a RRC connection setup complete, and connected to the mobile communication apparatus.

3. The method of claim 2, wherein in step (2-1) the RRC connection request sent from the mobile communication apparatus includes the IMSI of the mobile communication apparatus, after acquiring the identity contents that match with the IMSI included in the RRC connection request from the mobile communication apparatus authority list according to the IMSI, the initial direct transfer acquired from the mobile communication apparatus is sent to the core of the apparatus network to authorize the mobile communication apparatus for the required business from the core of the apparatus network.

4. The method of claim 2, when no identity contents that match with IMSI fed back by the mobile communication apparatus are acquired from the mobile communication apparatus authority list according to the inadmissible layer identity response that comprises the IMSI of the mobile communication apparatus, a RRC connection rejection will be sent to the mobile communication apparatus to re-select a communication area covered by another femtocell base station and execute step (2) after the mobile communication apparatus receives the RRC connection rejection in an attempt to perform a parking process by another femtocell base station.

5. The method of claim 4, wherein the RRC connection rejection indicates that network is congested.

6. The method of claim 2, wherein the mobile communication apparatus in step (2-2), after receiving the RRC connection setup, feeds back the initial direct transfer to the femtocell base station, and the femtocell base station stores the fed back initial direct transfer from the mobile communication apparatus, and sends the stored initial direct transfer to the core of the apparatus network in step (3) before authorizing the mobile communication apparatus to acquire the required business from the core of the apparatus network.

7. The method of claim 6, wherein in step (3) if no identity contents that match with IMSI fed back by the mobile communication apparatus are acquired from the mobile communication apparatus authority list according to the inadmissible layer identity response that includes the IMSI of the mobile communication apparatus, the femtocell base station will deletes the stored initial direct transfer.

8. A method for authorizing a mobile communication apparatus to park in a femtocell base station, applicable to a communication network comprising a core of an apparatus network, the femtocell base station and the mobile communication apparatus, the method comprising the steps of:
(1) creating a mobile communication apparatus authority list; and
(2) after acquiring identity contents that match with IMSI of a RRC connection request from the mobile communication apparatus authority list according to the RRC connection request including the IMSI of the mobile communication apparatus sent by the mobile communication apparatus, sending an initial direct transfer acquired from the mobile communication apparatus to the core of the apparatus network to authorize the mobile communication apparatus for acquiring required businesses from the core of the apparatus network.

9. The method of claim 8, wherein if no identity contents that match with IMSI fed back by the mobile communication apparatus are acquired from the mobile communication apparatus authority list according to the inadmissible layer identity response that includes the IMSI of the mobile communication apparatus, the femtocell base station sends a RRC connection rejection to the mobile communication apparatus to re-select a communication area covered by another femtocell base station and execute step (2) after the mobile communication apparatus receives the RRC connection rejection in an attempt to perform a parking process by another femtocell base station.

10. The method of claim 9, wherein the RRC connection rejection indicates that network is congested.

11. The method of claim 8, wherein in step (2) after receiving the RRC connection request from the mobile communication apparatus, a RRC connection setup is sent to the mobile communication apparatus such that, after receiving the RRC connection setup, the mobile communication apparatus feeds back a RRC connection setup complete and the initial direct transfer.

12. A femtocell base station for determining a parking permission for a mobile communication apparatus by rejecting an unauthorized mobile communication apparatus to park in a communication area covered by the femtocell base station or to permitting an authorized the mobile communication apparatus to park in the communication area, wherein the femtocell base station comprises:
a memory cell for storing a mobile communication apparatus authority list including identity contents, in which the identity contents act as a basis of authorization a mobile communication apparatus that matches with the identity contents to park in the femtocell base station; and
a processor for connecting to the mobile communication apparatus according to a RRC connection request sent from the mobile communication apparatus, wherein the processor simulates an inadmissible layer identity request sent from a core of an apparatus network to the mobile communication apparatus that creates the connection relation, receives an inadmissible layer identity response including an IMSI of the mobile communication apparatus fed back by the mobile communication apparatus, and searches the mobile communication apparatus authority list for the matched identity contents according to the IMSI in order to authorize the mobile communication apparatus to park in the communication area; when the searched identity contents that match with the IMSI fed back from the mobile communication apparatus, the mobile communication apparatus is permitted to park in the communication area, but when no identity contents match with the IMSI fed back from the mobile communication apparatus, the mobile communication apparatus is rejected from parking in the communication area.

13. The femtocell base station of claim 12, wherein in the process of authorizing the mobile communication apparatus to park in the communication area, the processor sends an initial direct transfer to the core of the apparatus network that provides required businesses to the mobile communication apparatus, and deletes the initial direct transfer when the mobile communication apparatus is not authorized to park in a communication coverage.

14. The femtocell base station of claim 13, wherein the processor, when authorizing the mobile communication apparatus to park in the communication coverage, sends the initial direct transfer to the core of the apparatus network that provides required business to the mobile communication apparatus, and deletes the initial direct transfer when the mobile communication apparatus is not authorized to park in the femtocell base station.
